# DEMANDE DE BREVET EUROPEEN

(11) **EP 0 682 957 A1**
(43) Date de publication de la demande: **22.11.1995**
(21) Numéro de dépôt: 95400992.4
(22) Date de dépôt: 02.05.1995
(51) Int. Cl.: A62D 3/00

(54) **Composition et procédé destinée à former une couverture étanche sur un liquide dégageant des vapeurs toxiques**

(30) Priorité: 17.05.1994 FR 9405999
(71) Demandeur: ELF ATOCHEM S.A., F-92800 Puteaux (FR)
(72) Inventeur: Luneteau, Jacky, F-13500 Martigues (FR)
(74) Mandataire: Chaillot, Geneviève

(57) **Abrégé**

Cette composition, destinée à former une couverture étanche et non toxique (A) sur un liquide (B) dégageant des vapeurs ou émanations toxiques par évaporation ou réaction avec les agents atmosphériques, est caractérisée par le fait qu'elle est constituée par un mélange comprenant (C) un liquide de faible tension de vapeur, miscible ou non miscible au liquide (B) et chimiquement inerte vis-à-vis de ce dernier ; et (D) des particules solides, de faible densité, inertes vis-à-vis des liquides (B) et (C), choisies pour permettre d'augmenter l'écart de densité du liquide (C) par rapport au liquide (B), et pour constituer un mélange (A) capable de flotter sur la surface du liquide (B), même si un liquide (C) miscible au liquide (B) et/ou ayant une densité voisine de, voire même supérieure à, celle de ce dernier est utilisé, la miscibilité du liquide (C) avec le liquide (B) étant, dans ce cas, empêchée par le mouillage préalable des particules solides (D) par le liquide (C).

## Description

La présente invention concerne une composition destinée à former une couverture étanche sur un liquide dégageant des vapeurs ou émanations toxiques par évaporation ou réaction avec des agents atmosphériques. L'invention concerne également le procédé pour la mise en oeuvre de cette composition, afin d'assurer la protection contre ces vapeurs ou émanations.

Il n'y a pas de limitation quant aux liquides dégageant des vapeurs toxiques contre lesquelles une protection est recherchée, mais on peut citer, à titre d'exemples, le bichlorure de soufre SCl₂, le monochlorure de soufre S₂Cl₂ et le trichlorure de phosphore PCl₃.

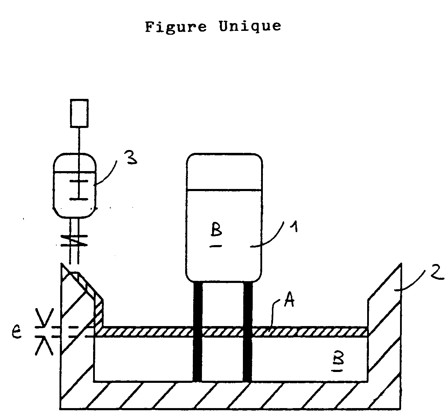

En usine, les bacs contenant ces liquides sont généralement placés dans des cuves de rétention, capables de recevoir le liquide en cas de rupture accidentelle du bac ou d'une canalisation. Ce dispositif, illustré par la figure unique du dessin annexé, permet d'éviter l'épandage sur une grande surface et limite la pollution à la surface de la cuve de rétention. Dans cette situation, les produits réactifs et sensibles à l'humidité, que sont notamment ceux cités ci-dessus, dégagent des vapeurs toxiques d'H₂S, HCl, Cl₂, SO₂, etc., lorsqu'ils sont au contact de l'atmosphère humide. Ces vapeurs toxiques sont alors susceptibles de polluer l'environnement.

On a donc recherché des solutions permettant de protéger l'environnement en cas d'épandage d'un produit toxique dans une cuve de rétention, afin de donner à l'industriel le temps de réagir pour pomper, récupérer ou neutraliser le produit sans danger pour l'environnement. C'est ainsi qu'on a proposé de former, sur le liquide toxique répandu, une couverture étanche par un second liquide non miscible au premier, non réactif, de densité plus faible. Malheureusement, la mise en application de ce système se heurte à deux problèmes majeurs, à savoir, d'une part, la grande miscibilité des produits toxiques avec des liquides chimiquement inertes, tels que le décane, l'heptane, le phtalate de dioctyle, les polysiloxanes, etc., et, d'autre part, la violente réactivité avec l'un des rares liquides non miscibles connus, à savoir l'eau.

La Société déposante a ainsi essayé divers liquides, tels que l'huile silicone (RHODORZIL 710), le décane, le dodécane, l'huile TRANSELF (type B), l'huile ESSO (ESSRI 100), l'huile VOLTALEF PC FFI 3XA, le fuel, l'huile de paraffine, le phtalate de dioctyle, pour assurer une protection contre SCl₂, et elle a constaté que ces liquides se mélangent avec le produit à protéger, conduisant à un dégagement d'HCl et à une formation de S libre. L'effet de couverture étanche espéré vis-à-vis de l'humidité atmosphérique n'est donc pas apporté.

Parallèlement, la Société déposante a essayé l'utilisation, pour réaliser cette couverture étanche, de particules solides de densité inférieure à 1, tels que le polyéthylène, le polypropylène, les micro-ballons de verre et les billes d'argile expansé. Ces solides, utilisés à l'état pur, en couches de 3 cm d'épaisseur sur la surface du liquide à protéger, ont conduit à l'effet inverse de celui recherché, à savoir à une augmentation de la surface d'échange avec l'humidité atmosphérique et un fort dégagement de gaz toxique.

La Société déposante est finalement parvenue à mettre au point une composition appropriée pour résoudre le problème posé. Cette composition, destinée à former une couverture étanche et non toxique (A) sur un liquide (B) dont on veut se protéger des vapeurs ou émanations toxiques, est caractérisée par le fait qu'elle est constituée par un mélange comprenant :
(C) un liquide de faible tension de vapeur, miscible ou non miscible au liquide (B) et chimiquement inerte vis-à-vis de ce dernier ; et
(D) des particules solides, de faible densité, inertes vis-à-vis des liquides (B) et (C), choisies pour permettre d'augmenter l'écart de densité du liquide (C) par rapport au liquide (B), et pour constituer un mélange (A) capable de flotter sur la surface du liquide (B), même si un liquide (C) miscible au liquide (B) et/ou ayant une densité voisine de, voire même supérieure à, celle de ce dernier est utilisé, la miscibilité du liquide (C) avec le liquide (B) étant, dans ce cas, empêchée par le mouillage préalable des particules solides (D) par le liquide (C).

Le liquide (C) est avantageusement constitué par au moins un composé choisi parmi le phtalate de dioctyle, le phtalate de di(2-éthylhexyle), fabriqué par la Société ELF ATOCHEM S.A. sous la dénomination "GARBEFLEX DOP-S", et les silicones, comme le produit commercialisé sous la dénomination de RHODORSIL 47 V 100 000.

Les particules solides (D) sont avantageusement des micro-ballons de verre chimiquement stables. Ces micro-ballons de verre ont notamment des propriétés chimiques semblables à celles d'un verre à base de borosilicate de soude et de chaux. Leur forme est avantageusement sphérique pour un rapport optimal volume/surface. Ils sont ininflammables, non poreux et ont notamment une dimension comprise entre 20 et 500 micromètres.

Dans la composition selon l'invention, le liquide (C) représente notamment de 95 à 81 % en poids, en particulier de 86 à 84 % en poids, du mélange (C) + (D), et les particules solides (D), de 5 à 19 % en poids, en particulier de 14 à 16 % en poids dudit mélange.

Le mélange (C) + (D) selon l'invention présente généralement une consistance allant de liquide à pâteuse.

La composition selon l'invention peut comprendre en outre au moins un agent de thixotropie (E), inerte vis-à-vis du liquide (B), capable d'augmenter la viscosité du liquide (C), le cas échéant jusqu'à l'obtention d'une consistance pâteuse, pour retarder ou annuler les phénomènes de convexion entre les liquides (B) et (C). De préférence, la composition selon l'invention contient au moins un agent de thixotropie (E) hydrophobe, capable de limiter l'interaction de l'humidité atmosphérique vis-à-vis de la couverture étanche (A) et du liquide (B), et capable de ralentir les phénomènes de décantation (liquide (C)/solide (D)).

L'agent de thixotropie hydrophobe (E) est notamment un gel de silice hydrophobe tel que ceux ayant des groupements méthyle à leur surface et commercialisés sous les dénominations AEROSIL R 202, R 805, R 812, R 972 et R 974 de surface spécifique respectivement 90, 150, 260, 110 et 170 m²/g.

Le ou les agents de thixotropie (E) représentent généralement jusqu'à 5 % en poids du mélange (C) + (D).

La composition selon l'invention peut également comprendre au moins un agent d'étalement (F), inerte vis-à-vis du liquide (B), consistant en un liquide de faible viscosité, capable de favoriser l'étalement de la couverture (A) sur le liquide (B) et un bon jointoiement de celle-ci autour des obstacles. De préférence, la composition comprend au moins un agent d'étalement (F) de forte tension de vapeur, capable de s'évaporer rapidement en surface lorsque la couverture (A) est étalée sur le liquide (B).

Le ou les agents d'étalement (F) de forte tension de vapeur sont avantageusement choisis parmi le 1,1,1-trichloroéthane et les hydrofluorocarbones à la condition qu'ils soient chimiquement inertes, tels que le 1,1,1,2-tétrafluoroéthane (134a), le pentafluoroéthane (125), le 1,1,1-trifluoroéthane (143a).

Le ou les agents d'étalement (F) représentent généralement jusqu'à 15 % en poids du mélange (C) + (D), avantageusement, de 0 à 5 % en poids dudit mélange.

La présente invention concerne également un procédé pour former une couverture étanche (A) sur un liquide (B) dégageant des vapeurs ou émanations toxiques par évaporation ou réaction avec des agents atmosphériques, caractérisé par le fait qu'on recouvre le liquide (B) par une couche de la composition telle que définie ci-dessus. On forme notamment une couche d'une épaisseur de l'ordre de 2 à 5 cm.

Le liquide (B) est, par exemple, comme indiqué ci-dessus, SCl₂, S₂Cl₂ ou PCl₃, répandu accidentellement dans une cuve de rétention dans laquelle a été placé un bac contenant ledit liquide (B) et qui est capable de contenir ce dernier en cas de rupture accidentelle dudit bac ou d'une canalisation.

Sur la figure unique du dessin annexé, on a représenté, de façon schématique, un exemple de dispositif permettant de distribuer la composition selon l'invention pour déposer une couverture étanche (A) sur un liquide (B).

Ce dernier est contenu dans un bac 1 reposant sur des pieds, l'ensemble étant placé dans une cuve de rétention 2, dont la bordure supérieure est inclinée vers l'intérieur de la cuve. Un réservoir 3 de la composition selon l'invention est disposé au-dessus de la cuve 2. En cas de rupture accidentelle du bac 1, du liquide (B) se répand dans la cuve 2, et l'on ouvre le réservoir 3 pour permettre à la composition selon l'invention de couler contre le bord supérieur oblique de la cuve 2, et de venir former une couverture (A) étanche aux vapeurs et émanations produites par le liquide (B), sur une épaisseur (e) généralement comprise entre 3 et 5 cm.

Les exemples ci-après illustrent l'invention, sans toutefois en limiter la portée.

### Exemple 1

On a préparé la composition suivante, destinée à former une couverture étanche (A) sur un liquide (B) constitué par SCl₂, S₂Cl₂, PCl₃ ou tout autre produit réputé toxique pour ses vapeurs ou les dégagements gazeux qu'il produit par réaction avec l'humidité atmosphérique :

| | |
|---|---|
| Phtalate de di(2-éthylhexyle), commercialisé par la Société "ELF ATOCHEM S.A.", sous la dénomination "GARBEFLEX DOP-S" (liquide C) | 85 parties en poids |
| Micro-ballons de verre de densité 0,2 et de diamètre moyen 177 µm (moins de 5 % en poids retenus sur le tamis de 177 µm), commercialisés par la Société "SICOMIN COMPOSITE" sous la dénomination "K20" (solide D) | 15 parties en poids |
| Gel de silice hydrophobe, commercialisé par la Société "SICOMIN COMPOSITE" sous la dénomination "Aerosil 202" (solide E) | 2 parties en poids |
| 1,1,1-trichloroéthane commercialisé par la Société "ELF ATOCHEM S.A." sous la dénomination "Baltane" (liquide F) | 5 parties en poids |

Les constituants sont mélangés de la façon suivante : on verse le solide (E) dans le liquide (C), on agite énergiquement, puis on verse le solide (D) dans le mélange (C) + (E) et on malaxe sans agitation cisaillante pour ne pas casser les micro-ballons. Enfin, on ajoute le liquide (F). Si besoin est, on malaxe l'ensemble quelques minutes avant l'épandage pour obtenir une composition coulable onctueuse au moment de la coulée. Après épandage et au bout de quelques heures, la composition présente un aspect plus pâteux.

Le liquide (C) est miscible et non réactif avec le liquide (B).

Les particules solides (D) sont inertes vis-à-vis des liquides (B), (C) et (F). Elles permettent d'abaisser la densité du mélange liquide (C) + solides (D) de 11%, ce qui améliore l'effet de couverture. La rétention du liquide (C) sur les parois des micro-ballons de verre limite les effets de convexion du mélange liquide (C) + solides (D) avec le liquide (B).

Le solide (E) limite les phénomènes d'hydratation du liquide principal (C). Son effet thixotrope est très intéressant, car il permet d'augmenter la viscosité du liquide (C) dans un rapport pouvant aller de 1 à 100, jusqu'à l'obtention d'une pâte. Ceci retarde et annule les phénomènes parasites de convexion entre la composition destinée à former la couverture étanche (A) et le liquide (B).

Le liquide (F) permet d'apporter une fluidité à la pâte précédemment fabriquée, ce qui permet un bon étalement et un bon jointoiement de la couche protectrice (A) autour des obstacles ; en surface, le liquide (F) s'évapore et redonne un effet plus consistant et plus dur après étalement.

### Exemple 2 : Essais de couverture étanche réalisés en laboratoire

Les essais consistent à suivre les pertes de poids en fonction du temps d'un récipient contenant le liquide (B) exposé à l'atmosphère. L'épaisseur de ce liquide (B) à émanations toxiques est de 3 cm, et la surface d'évaporation est de 83,3 cm².

Durant la même période et dans les mêmes conditions, on suit aussi les pertes de poids, en fonction du temps, d'un récipient contenant le liquide (B), recouvert d'une couche de 2 cm du mélange liquide (A) exposé à l'atmosphère. La couverture (A) a un aspect lisse.

Les Tableaux 1 à 3 ci-après rendent compte des pertes de poids et montrent l'efficacité du système avec couverture (A), par rapport à celui sans couverture.

**TABLEAU 1**

| Liquide B | | SCl₂ | | |
|---|---|---|---|---|
| Couverture A | | sans | avec | |
| Perte de poids (kg/m²) | au bout de 28 heures | 15,370 | 0,072 | |
| | au bout de 4 jours | évaporation du produit | 0,080 | |

**TABLEAU 2**

| Liquide B | | S₂Cl₂ | | |
|---|---|---|---|---|
| Couverture A | | sans | avec | |
| Perte de poids (kg/m²) | au bout de 21 heures | 2,677 | 0,036 | |
| | au bout de 7 jours | 25,006 | 0,180 | |

**TABLEAU 3**

| Liquide B | | PCl₃ | | |
|---|---|---|---|---|
| Couverture A | | sans | avec | |
| Perte de poids (kg/m²) | au bout de 26 heures | 12,149 | 0,024 | |
| | au bout de 7 jours | 25,534 | 0,300 | |

### Exemple 3 : Essais en extérieur

Des essais sur des surfaces de 1 m² ont été réalisés avec SCl₂ de la façon suivante : après déversement du SCl₂ dans une cuvette, l'atmosphère environnante était irrespirable sans masque à gaz ; des rideaux d'eau sous le vent protégeaient l'environnement.

On a déversé ensuite, sur SCl₂, le mélange préparé à l'Exemple 1 pour former une couverture (A) de 4 cm d'épaisseur. Il est alors devenu possible de se déplacer autour de la cuve sans masque à gaz et sans percevoir d'odeur, les rideaux d'eau n'étant plus nécessaires.

## Revendications

**1 -** Composition destinée à former une couverture étanche et non toxique (A) sur un liquide (B) dégageant des vapeurs ou émanations toxiques par évaporation ou réaction avec les agents atmosphériques, caractérisée par le fait qu'elle est constituée par un mélange comprenant :
(C) un liquide de faible tension de vapeur, miscible ou non miscible au liquide (B) et chimiquement inerte vis-à-vis de ce dernier ; et
(D) des particules solides, de faible densité, inertes vis-à-vis des liquides (B) et (C), choisies pour permettre d'augmenter l'écart de densité du liquide (C) par rapport au liquide (B), et pour constituer un mélange (A) capable de flotter sur la surface du liquide (B), même si un liquide (C) miscible au liquide (B) et/ou ayant une densité voisine de, voire même supérieure à, celle de ce dernier est utilisé, la miscibilité du liquide (C) avec le liquide (B) étant, dans ce cas, empêchée par le mouillage préalable des particules solides (D) par le liquide (C).

**2 -** Composition selon la revendication 1, caractérisée par le fait que le liquide (C) est constitué par au moins un composé choisi parmi le phtalate de dioctyle, le phtalate de di(2-éthylhexyle) et les silicones.

**3 -** Composition selon l'une des revendications 1 et 2, caractérisée par le fait que les particules solides (D) sont des micro-ballons de verre.

**4 -** Composition selon l'une des revendications 1 à 3, caractérisée par le fait que le liquide (C) représente de 95 à 81 % en poids du mélange (C) + (D), et les particules solides (D), de 5 à 19 % en poids dudit mélange.

**5 -** Composition selon l'une des revendications 1 à 4, caractérisée par le fait qu'elle comprend en outre au moins un agent de thixotropie (E), inerte vis-à-vis du liquide (B), capable d'augmenter la viscosité du liquide (C), le cas échéant jusqu'à l'obtention d'une consistance pâteuse, pour retarder ou annuler les phénomènes de convexion entre les liquides (B) et (C).

**6 -** Composition selon la revendication 5, caractérisée par le fait qu'elle comprend au moins un agent de thixotropie (E) hydrophobe, capable de limiter l'interaction de l'humidité atmosphérique vis-à-vis de la couverture étanche (A) et du liquide (B), et capable de ralentir les phénomènes de décantation (liquide (C) / solide (D)).

**7 -** Composition selon la revendication 6, caractérisée par le fait que l'agent de thixotropie hydrophobe (E) est un gel de silice hydrophobe.

**8 -** Composition selon l'une des revendications 5 à 7, caractérisée par le fait que le ou les agents de thixotropie (E) représentent jusqu'à 5 % en poids du mélange (C) + (D).

**9 -** Composition selon l'une des revendications 1 à 8, caractérisée par le fait qu'elle comprend en outre au moins un agent d'étalement (F), inerte vis-à-vis du liquide (B), consistant en un liquide de faible viscosité, capable de favoriser l'étalement de la couverture (A) sur le liquide (B) et un bon jointoiement de celle-ci autour des obstacles.

**10 -** Composition selon la revendication 9, caractérisée par le fait qu'elle comprend au moins un agent d'étalement (F) de forte tension de vapeur, capable de s'évaporer rapidement en surface lorsque la couverture (A) est étalée sur le liquide (B).

**11 -** Composition selon la revendication 10, caractérisée par le fait que les agents d'étalement (F) de forte tension de vapeur sont choisis parmi le 1,1,1-trichloroéthane et les hydrofluorocarbones.

**12 -** Composition selon l'une des revendications 9 à 11, caractérisée par le fait que le ou les agents d'étalement (F) représentent jusqu'à 15 % en poids du mélange (C) + (D).

**13 -** Procédé pour former une couverture étanche (A) sur un liquide (B) dégageant des vapeurs toxiques par évaporation ou réaction avec les agents atmosphériques, caractérisé par le fait qu'on recouvre le liquide (B) par une couche de la composition telle que définie à l'une des revendications 1 à 12.

**14 -** Procédé selon la revendication 13, caractérisé par le fait qu'on forme une couche d'une épaisseur de l'ordre de 2 à 5 cm.

**15 -** Procédé selon l'une des revendications 13 et 14, caractérisé par le fait que le liquide (B) est SCl₂, S₂Cl₂ ou PCl₃, répandu accidentellement dans une cuve de rétention dans laquelle a été placé un bac contenant ledit liquide (B) et qui est capable de contenir ce dernier en cas de rupture accidentelle dudit bac ou d'une canalisation.
